# EUROPÄISCHE PATENTSCHRIFT

(11) **EP 1 993 879 B1**
(45) Veröffentlichungstag und Bekanntmachung des Hinweises auf die Patenterteilung: **27.07.2011**
(21) Anmeldenummer: 07712276.0
(22) Anmeldetag: 21.02.2007
(51) Int. Cl.: B60R 16/03, H02J 7/00

(54) **VERFAHREN UND VORRICHTUNG ZUR ANSTEUERUNG EINER SCHALTUNGSANORDNUNG MIT ELEKTRISCHEN STELLGLIEDERN**
METHOD AND DEVICE FOR CONTROLLING A CIRCUIT ARRANGEMENT WITH ELECTRIC ACTUATORS
PROCÉDÉ ET DISPOSITIF DE COMMANDE D'UN AGENCEMENT DE CIRCUIT AU MOYEN D'ACTIONNEURS ÉLECTRIQUES

(30) Priorität: 15.03.2006 DE 102006011805
(43) Veröffentlichungstag der Anmeldung: 26.11.2008
(73) Patentinhaber: ZF Friedrichshafen AG, 88038 Friedrichshafen (DE)
(72) Erfinder: INGENBLEEK, Robert, 88079 Kressbronn (DE); ULBRICHT, Markus, 88069 Tettnang (DE); STEINBORN, Mario, 88046 Friedrichshafen (DE); BRENTEL, Armin, 88045 Friedrichshafen (DE)
(86) Internationale Anmeldenummer: PCT/EP2007/051677
(87) Internationale Veröffentlichungsnummer: WO 2007/104630

(56) Entgegenhaltungen:
- EP-A- 1 626 322
- WO-A-02/087053
- DE-A1- 19 857 916

## Beschreibung

Die Erfindung betrifft ein Verfahren zur Ansteuerung einer Schaltungsanordnung mit elektrischen Stellgliedern gemäß dem Oberbegriff des Patentanspruchs 1

In Kraftfahrzeugen werden elektrisch betätigbare Stellglieder, beispielsweise Ventile, insbesondere für Regelungs- und Steuerungsaufgaben in Hydraulikkreisen eingesetzt. Im Wesentlichen werden zwei Bauarten unterschieden. Bei den üblicherweise verwendeten vorgesteuerten Ventilen wirkt ein Magnet in einem Vorsteuersystem auf eine Abbaubohrung, die eine Druckdifferenz zwischen den druckbeaufschlagten Seiten eines Dichtelementes ausgleicht, wobei das Dichtelement am Ventilsitz vom Druck-Medium selbst betätigt wird. Magnetventile dieser Bauart haben den Vorteil, dass sie mit relativ geringer Kraft und entsprechend geringem Stromverbrauch große Durchflussmengen bei hohen Drücken steuern können. Da sie nach dem Differenzdruckprinzip arbeiten, benötigen sie jedoch stets einen bestimmten Mindestbetriebsdruck.

Direktgesteuerte Ventile benötigen hingegen für ihre Schaltfunktion keinen Mindestbetriebs- bzw. Differenzdruck, ihr Arbeitsbereich beginnt daher bei Null Bar und reicht bis zu einem bestimmten maximalen Betriebsdruck. Derartige Ventile lassen sich besonders kompakt herstellen, sind für nahezu jede beliebige Einbaulage geeignet und sind vergleichsweise kostengünstig. Bei Magnetventilen dieser Bauart wird die Magnetkraft direkt zum Öffnen oder Schließen des Ventilsitzes verwendet. Standardmäßig wird im stromlosen Zustand der Ventilsitz meist durch Federkraft und dem statischen Druck des Mediums geschlossen. Wird der Magnet bzw. die Magnetspule mit elektrischer Spannung beaufschlagt, hebt ein Anker gegen diese Kräfte vom Ventilsitz ab und das Ventil öffnet. Dabei hängen der maximale Betriebsdruck und der Volumenstrom direkt von der Magnetkraft ab. Direktgesteuerte Ventile verbrauchen daher in der Regel mehr Strom als vorgesteuerte Ventile. Dies kann im Betrieb eine unzulässig hohe Strombelastung in elektrischen Schaltkreisen mit begrenzter Stromversorgung zur Folge haben.

Aus der DE 199 04 902 A1 ist ein Proportional-Druckregelventil zur Ansteuerung einer Kupplung in einem automatischen Kraftfahrzeug-Schaltgetriebe bekannt, dass als ein Direktsteuerventil ausgebildet ist. Das Direktsteuerventil weist einen Proportional-Magneten auf, der über eine Ankerstange mit einem Kolben verbunden ist. Der Kolben wird durch Federkraft in einem Ausgangszustand gegen einen Ventilsitz gedrückt, wodurch das Ventil geschlossen ist. Durch eine geeignete Bestromung der Spule des Magneten wird der Magnetanker und damit die Ankerstange mit dem Kolben gegen die Federkraft bewegt, wodurch sich der Kolben vom Ventilsitz abhebt und eine Zulauföffnung für das Medium (Hydrauliköl) freigegeben wird. Bei voll geöffnetem Zulauf sitzt der Magnetanker auf einer Distanzscheibe in einer Halteposition und wird über eine entsprechende Bestromung in dieser Position gehalten. Über den Spulenstrom, unter Berücksichtigung des hydraulischen Drucks gegen den Kolben, kann diese Haltefunktion eingestellt werden und ist für eine Druckregelung an einem Kupplungszylinder nutzbar.

Weiterhin ist aus der DE 100 03 896 A1 ein Verfahren zur Ansteuerung von Proportional-Magneten in der Direktsteuerventil-Bauweise, wie in der DE 199 04 902 A1 beschrieben, oder in einer Vorsteuerventil-Bauweise, wie aus der DE 199 04 901 A1 ersichtlich, bekannt, wobei jeweils eine Halteposition realisiert ist. Dabei sind Mittel vorgesehen, welche die Bewegungen des Ankers anhand von induzierten Spannungen, mit Rückwirkungen auf den Spulenstrom, erkennen. Diese Rückwirkungen stehen in einer direkten Beziehung mit der Haltefunktion und können ausgenutzt werden, um einen kontrollierten Übergang zwischen einem Haltebereich (Druckbereich in der Halteposition) und einem Regelbereich (Druckbereich außerhalb der Halteposition) des Ventils zu steuern.

Schließlich ist aus der DE 195 36 697 A1 eine Regelanordnung zur Regelung des Ansteuerstroms eines Proportionalwegeventils in einer hydraulischen Regelstrecke bekannt. Die Regelanordnung geht von Nichtlinearitäten in der hydraulischen Strecke aus, die mit herkömmlichen Zustandsbeobachtern nicht ausreichend erfasst werden, und benutzt digital erfasste Sensorwerte, aus denen nach einem Iterationsverfahren in einer Anzahl von Integrationsschritten geschätzte Signale ermittelt werden, die dann zur Weiterverarbeitung der Regelanordnung zur Verfügung gestellt werden. Das Verfahren ist sowohl für Systeme mit vorgesteuerten Ventilen als auch für Systeme mit direktgesteuerten Ventilen geeignet. Bei direktgesteuerten Ventilen kann beispielsweise eine aus dem gemessenen Spulenstrom abgeleitete Messgröβe als Eingangsgröße für den Regelkreis verwendet werden.

Nachteilig bei den bekannten Verfahren und Vorrichtungen zur Ansteuerung von Proportional-Magneten ist, dass sie zwar die Ansteuerung einzelner Proportionalventile regeln. Dabei werden die Proportionalventile jedoch nur für sich betrachtet. Die Auswirkungen, die der relativ hohe Strombedarf insbesondere direktgesteuerter Ventile in einer Schaltungsanordnung mit einer Anzahl von verschiedenen Verbrauchern haben kann, bleiben dabei weitgehend unberücksichtigt. Dies kann in einer Schaltungsanordnung mit einem begrenzten zur Verfügung stehenden Gesamtstrom, wie in Kraftfahrzeug-Stromnetzen üblich, die Betriebssicherheit des betreffenden Systems beeinträchtigen.

Die DE 198 57 916 A1 offenbart ein Verfahren und eine Vorrichtung zur Steuerung von elektrischen Verbrauchern in einem Fahrzeug, wobei eine Steuerungsstruktur für die Verbraucher vorgesehen ist, die aus wenigstens einem übergeordneten Verbrauchermanagement besteht, das von den Verbrauchern einzeln oder als Summen zusammengefasst Anforderungen bezüglich der Verbraucherleistung empfängt. Die Steuerungsstruktur weist ferner einen Koordinator für das elektrische Bordnetz und dessen Leistungserzeugung auf, der vom Verbrauchermanagement die Summe der angeforderten elektrischen Verbraucherleistung erhält. Der Koordinator des Bordnetzes stellt durch Aufträge an Bordnetzkomponenten die angeforderte elektrische Leistung ein und das Verbrauchermanagement nimmt die erzeugte elektrische Leistung durch Steuern der Verbraucher ab.

Vor diesem Hintergrund liegt der Erfindung die Aufgabe zugrunde, ein Verfahren und eine Vorrichtung zur Ansteuerung einer Schaltungsanordnung anzugeben, welche bei einem vergleichsweise erhöhten Strombedarf elektrischer Stellglieder oder Verbraucher, beispielsweise direktgesteuerter Ventile, ein Überschreiten einer vorgegebenen zulässigen Strombelastung zuverlässig vermeiden.

Die Lösung der Aufgabe ergibt sich zunächst hinsichtlich des Verfahrens aus den Merkmalen des Hauptanspruchs, während vorteilhafte Ausgestaltungen und Weiterbildungen der Erfindung den zugeordneten Unteransprüchen entnehmbar sind.

Der Erfindung liegt die Erkenntnis zugrunde, dass mit Hilfe einer Überwachungsfunktion, die Schaltanforderungen nach einer Prüfung gegebenenfalls sequenziell abarbeitet, ein Überschreiten einer zulässigen Strombelastung in der Schaltungsanordnung vermieden werden kann.

Demnach geht die Erfindung aus von einem Verfahren zur Ansteuerung einer Schaltungsanordnung mit direktgesteuerten Steuerventilen einer elektrohydraulischen, elektropneumatischen, elektromagnetischen oder elektromotorischen Getriebesteuerung eines Kraftfahrzeuges gemäß den Patentansprüchen.

Durch die erfindungsgemäße Stromüberwachungsfunktion wird beispielsweise in einer elektrohydraulischen Getriebesteuerung vorteilhaft ermöglicht, direktgesteuerte Ventile mit einem erhöhten Strombedarf einzusetzen und gleichzeitig dabei die Einhaltung einer maximalen Strombelastung der Getriebesteuerung zu gewährleisten. Dies wird dadurch erreicht, dass Schaltanforderungen erfasst und einer Prioritätsprüfung unterzogen werden. Ist die Gefahr eines Überschreitens eines zuvor ermittelten zur Verfügung stehenden Gesamtstroms gegeben, werden positiv geprüfte Schaltanforderungen aufgrund ihrer Priorität geschaltet. Hingegen werden negativ geprüfte Anforderungen zunächst blockiert, bis deren Abarbeitung möglich ist und dann geschaltet.

Dieses Verfahren ist grundsätzlich beliebig auf entsprechende Schaltkreise anwendbar, wobei die jeweiligen Stromgrenzen frei applizierbar sind. Dadurch ergeben sich sehr flexible Anwendungsmöglichkeiten. Insbesondere in Kraftfahrzeugen können auf diese Weise direktgesteuerte Magnetventile als Aktuatoren eingesetzt werden, um die in einem Getriebesteuergerät verarbeiteten Signale zur Einleitung eines Gangwechsels in eine Betätigung der entsprechenden Schaltventile zur Betätigung zumindest einer Kupplung umzusetzen.

Dabei ist es vorteilhaft, angeforderte Ventilbestromungen abhängig von deren jeweiligen Funktion als Schaltelement, gegebenenfalls in einer aktiven Schaltphase, und der Art der Schaltanforderung zu priorisieren, wobei bei der Art der Schaltanforderung wenigstens zwischen den Funktionen Einschalten, Umschalten und Bestätigen unterschieden werden kann, da dabei verschiedene Stromlasten anfallen. Dies führt dazu, dass vorrangige, beispielsweise sicherheitsrelevante, Ventilbetätigungen immer unmittelbar ausgeführt werden, und gleichzeitig eine effektive Abfolge der Schaltvorgänge gewährleistet wird.

Außerdem kann vorgesehen sein, dass der verfügbare Gesamtstrom aus einem aktuellen Gesamtstrom, vorgegebenen Grenzströmen und vorbestimmten Stromreservierungen für noch zu schaltende Schaltelemente ermittelt wird, wobei zudem vorgesehen sein kann, dass der aktuelle Gesamtstrom aus einer permanenten Strombelastung der Schaltungsanordnung und einem aktuellen Strombedarf aktiver Schaltelemente ermittelt wird, und dass bei den Grenzströmen zwischen dauernden Strombelastungen und kurzzeitigen Strombelastungen unterschieden wird.

Dadurch, dass permanente, momentane und zu erwartende Strombelastungen berücksichtigt werden, ergibt sich ein effektiver Grenzwert für den tatsächlich zur Verfügung stehenden Gesamtstrom bei den jeweiligen Betriebsbedingungen, der eine effektive Ausnutzung des Strompotenzials ermöglicht, so dass gegebenenfalls zurückgestellte Schaltvorgänge nur so kurz wie unbedingt nötig verzögert werden.

Um den aktuellen Strombedarf aktiver Schaltelemente sowie die Grenzströme für dauernde und/oder kurzzeitige Strombelastungen zu ermitteln, ist es vorteilhaft, die Kenndaten der meist ohnehin vorhandenen jeweiligen elektrischen Sicherungen heranzuziehen. Diese Daten sind als Eckdaten für die Ermittlung des verfügbaren Gesamtstroms jederzeit abrufbar.

Eine noch genauere Bestimmung des verfügbaren Gesamtstroms lässt sich dadurch erreichen, dass, wie außerdem vorgesehen sein kann, der Strombedarf der aktiven Schaltelemente und/oder die Grenzströme für dauernde und/oder kurzzeitige Strombelastungen mit Hilfe eines Lernalgorithmus ermittelt wird, der aus zurückliegenden Ansteuerungen abgeleitet wird oder abgeleitet ist.

Weiterhin kann vorgesehen sein, dass aus dem ermittelten verfügbaren Gesamtstrom ein maximal zulässiger Dauerstrom und ein kurzeitig verfügbarer Maximalstrom bestimmt werden. Da es in der Regel unschädlich ist, kurzeitige Überlastungen an den entsprechenden Sicherungen von elektrischen Verbrauchern zuzulassen, ist es vorteilhaft, über die permanente Strombelastung hinausgehende kurzeitige Schaltvorgänge nicht zu blockieren. Dazu ist es sinnvoll, bei der Prüfung der Schaltanforderungen eine zu erwartende Dauer einer jeweiligen Ansteuerung zu berücksichtigen.

Zur Verdeutlichung der Erfindung ist der Beschreibung eine Zeichnung eines Ausführungsbeispiels beigefügt.

In dieser zeigt:
Fig. 1 ein Blockschaltbild einer elektronischen Getriebesteuerung und
Fig. 2 ein Strom-Schema für eine Stromüberwachungsfunktion.

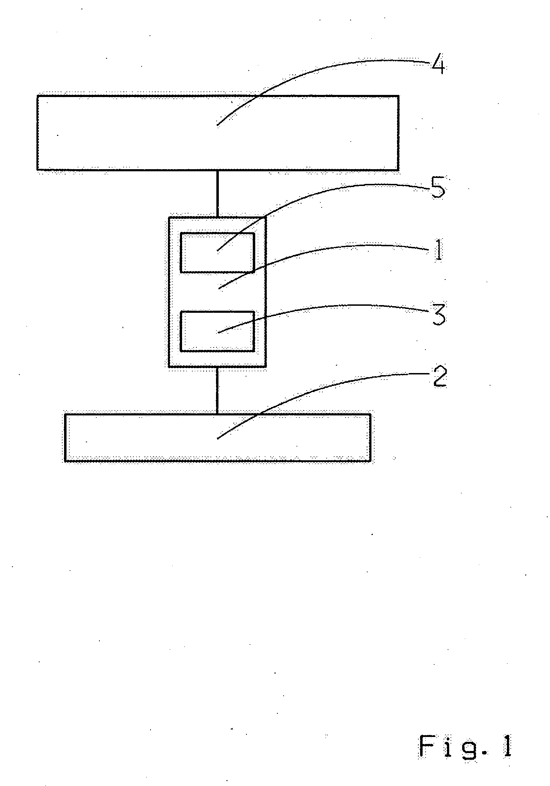

Demnach ist in Fig. 1 ein vereinfachtes Blockschaltbild einer an sich bekannten elektronischen Getriebesteuerung eines Kraftfahrzeuges gezeigt. Darin ist eine zentrale Getriebe-Steuereinheit 1 mit einem angeschlossenen Hydraulikkreis 5 mit (nicht dargestellten) direktgesteuerten elektromagnetischen Steuerventilen vorgesehen. Die Getriebe-Steuereinheit 1 kommuniziert mit einer Motorsteuer- und Signalerfassungseinheit 2, über die Daten bezüglich eines Fahrerwunsches und/oder einer Fahrsituation erfassbar sind.

Die Getriebe-Steuereinheit 1 weist zudem eine erfindungsgemäße Prozessoreinheit 3 auf, in der zeitaufigelöst elektrische Strom- und Spannungsdaten erfassbar und mittels einer geeigneten Software verarbeitbar sind, wodurch eine erfindungsgemäße Stromüberwachungsfunktion zur Verfügung gestellt wird. Über Ausgangsdaten der Getriebe-Steuereinheit 1 sind die Schaltelemente des Hydraulikkreises 5 ansteuerbar, die ihrerseits eine Getriebe- und/oder Kupplungsanordnung 4 ansteuern.

Bei einer elektronischen Getriebesteuerung wird ein Fahrerwunsch beispielsweise durch eine Wählhebelstellung, einen Fahrprogrammschalter, einen Kick-down-Schalter und/oder eine Drosselklappenstellung in der Getriebe-Steuereinheit 1 in Signale, beispielsweise zur Gangauswahl, Wandlerüberbrückung oder Kupplungsbetätigung umgewandelt. Damit werden die zugeordneten Steuerventile im Hydraulikkreis 5 angesteuert, die die entsprechenden Schaltventile betätigen.

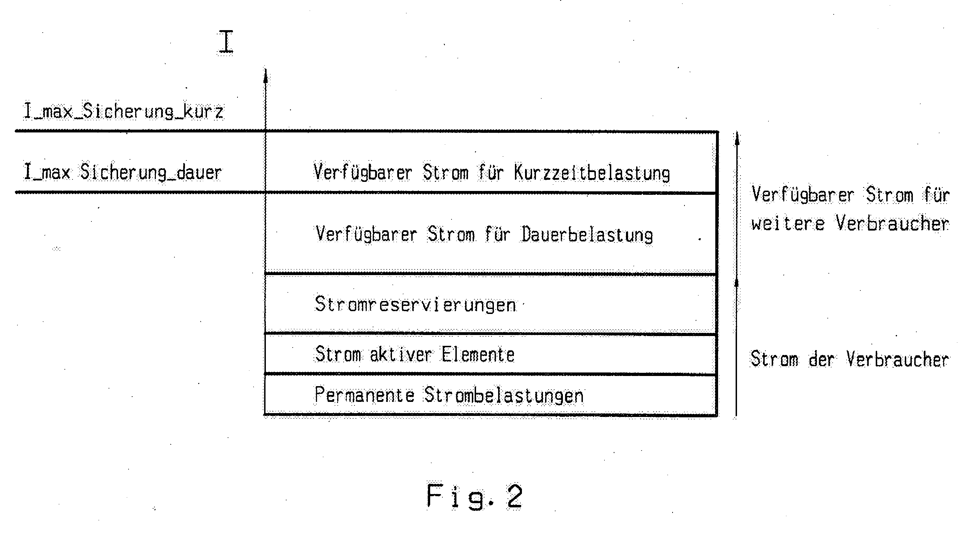

Im Folgenden wird ein Verfahren zur Ansteuerung einer Schaltungsanordnung mit direktgesteuerten Steuerventilen einer derartigen elektrohydraulischen Getriebesteuerung eines Kraftfahrzeuges anhand des in Fig. 2 gezeigten Strom-Schemas, in dem die einzelnen Stromanteile dargestellt sind, erläutert:

Dabei werden zunächst "permanente Strombelastungen", beispielsweise die permanente Versorgung einer elektronischen Steuereinheit, erfasst und der momentane "Strom aktiver Elemente", bezogen auf deren Sicherung festgestellt. Daraus ergibt sich ein aktueller Gesamtstrom. Dem werden "Stromreservierungen" für nachfolgend zu schaltende Elemente bei der Weiterverarbeitung hinzugefügt. Daraus wird ein festgelegter "Strom der Verbraucher" berechnet.

Anschließend werden Grenzströme I_max_Sicherung_kurz für kurzzeitige und I_max_Sicherung_dauer für dauernde Belastungen an den zugehörigen Sicherungen anhand der Sicherungsdaten und der bisherigen Ansteuerung ermittelt. Die Differenzen zwischen dem ..Strom der Verbraucher" und den Grenzströmen ergeben einen frei "verfügbaren Strom für weitere Verbraucher" für kurzzeitige bzw. dauernde Lasten. Aus den Grenzströmen und dem aktuellen Gesamtstrom sowie den Stromreservierungen ergibt sich ein verfügbarer Gesamtstrom des Systems für kurzzeitige bzw. für dauernde Belastungen.

Ausgehend von diesem ermittelten verfügbaren Gesamtstrom werden alle zu einem Zeitpunkt vorliegenden Schaltanforderungen gegenüber den zur Verfügung stehenden elektrischen Strömen, einer zu erwartenden Dauer der Ansteuerung und vorgegebenen Prioritäten geprüft. Dabei werden angeforderte Ventilbestromungen nach Typ und Funktion des jeweiligen Schaltelementes im Hydraulikkreis, nach einer momentanen Schaltphase sowie nach der Art der Schaltanforderungen, beispielsweise Umschalten gegebenenfalls mit Gegenimpuls, Einschalten oder Bestätigen eingestuft.

In der Folge werden dann als vorrangig bestimmte notwendige Bestromungen sofort geschaltet und gegebenenfalls andere Bestromungen erst dann geschaltet, sobald dies möglich ist, also wenn der maximal verfügbare Strom dadurch nicht mehr überschritten wird.

Ergibt die Prüfung, dass der verfügbare Gesamtstrom für alle aktuell vorliegenden Schaltanforderungen reicht, können alle Schaltanforderungen selbstverständlich ohne zeitliche Einschränkungen abgearbeitet werden.

### Bezugszeichen

- 1: Getriebe-Steuereinheit
- 2: Motorsteuer- und/oder Signalerfassungseinheit
- 3: Prozessoreinheit
- 4: Getriebe- und/oder Kupplungsanordnung
- 5: Hydraulikkreis

## Patentansprüche

1. Ansteuerungsverfahren einer Schaltungsanordnung mit direktgesteuerten Steuerventilen einer elektrohydraulischen oder elektropneumatischen Getriebesteuerung eines Kraftfahrzeuges, **dadurch gekennzeichnet, dass** eine Stromüberwachungsfunktion zur Begrenzung einer Strombelastung in der Schaltungsanordnung vorgesehen ist, die wenigstens folgende Schritte umfasst:
a) Ermittlung eines zu einem Zeitpunkt verfügbaren Gesamtstroms der Schaltungsanordnung,
b) Erfassung von Schaltanforderungen von Schaltelementen, wobei eine Schaltanforderung zur Bestromung eines der Steuerventile abhängig von dessen Funktion als Schaltelement und der Art der Schaltanforderung mit einer Priorität versehen wird,
c) Vergleich des durch die Schaltanforderungen angeforderten Strombedarfs mit dem verfügbaren Gesamtstrom,
d) Prüfung der Schaltanforderungen nach vorgegebenen Prioritäten, und
e) sequenzielle Schaltung von Schaltelementen entsprechend der Prioritätsprüfung, wenn die Schaltanforderungen zu einer Überschreitung des zur Verfügung stehenden Gesamtstroms führen würden, und
f) unmittelbare Schaltung der Schaltelemente, wenn die Schaltanforderungen nicht zu einer Überschreitung des zur Verfügung stehenden Gesamtstroms führen würden.

2. Ansteuerungsverfahren nach Anspruch 1, **dadurch gekennzeichnet, dass** der verfügbare Gesamtstrom aus einem aktuellen Gesamtstrom, vorgegebenen Grenzströmen und vorbestimmten Stromreservierungen für noch zu schaltende Schaltelemente ermittelt wird.

3. Ansteuerungsverfahren nach Anspruch 2, **dadurch gekennzeichnet, dass** der aktuelle Gesamtstrom aus einer permanenten Strombelastung der Schaltungsanordnung und einem aktuellen Strombedarf aktiver Schaltelemente ermittelt wird.

4. Ansteuerungsverfahren nach Anspruch 2, **dadurch gekennzeichnet, dass** bei den Grenzströmen zwischen dauernden Strombelastungen und kurzzeitigen Strombelastungen unterschieden wird.

5. Ansteuerungsverfahren nach zumindest einem der Ansprüche 1 bis 4, **dadurch gekennzeichnet, dass** aus dem ermittelten verfügbaren Gesamtstrom ein maximal zulässiger Dauerstrom und ein kurzeitig verfügbarer Maximalstrom bestimmt wird.

6. Ansteuerungsverfahren nach zumindest einem der Ansprüche 1 bis 5, **dadurch gekennzeichnet, dass** bei der Prüfung der Schaltanforderungen eine zu erwartende Dauer einer jeweiligen Ansteuerung berücksichtigt wird.

7. Ansteuerungsverfahren nach zumindest einem der Ansprüche 1 bis 6, **dadurch gekennzeichnet, dass** eine Schaltanforderung zur Bestromung eines Ventils abhängig von einer aktiven Schaltphase mit einer Priorität versehen wird.

8. Ansteuerungsverfahren nach zumindest einem der Ansprüche 1 bis 7, **dadurch gekennzeichnet, dass** bei der Art der Schaltariforderung wenigstens zwischen den Funktionen Einschalten, Umschalten und Bestätigen unterschieden wird.

9. Ansteuerungsverfahren nach zumindest einem der Ansprüche 1 bis 8, **dadurch gekennzeichnet, dass** zur Ermittlung des Strombedarfs der aktiven Schaltelemente und/oder zur Ermittlung der Grenzströme für dauernde und/oder kurzzeitige Strombelastungen Kenndaten der jeweiligen elektrischen Sicherungen herangezogen werden.

10. Ansteuerungsverfahren nach zumindest einem der Ansprüche 1 bis 9, **dadurch gekennzeichnet, dass** der Strombedarf der aktiven Schaltelemente und/oder die Grenzströme für dauernde und/oder kurzzeitige Strombelastungen mit Hilfe eines Lernalgorithmus ermittelt wird, der aus zurückliegenden Ansteuerungen abgeleitet ist.

## Claims

1. Actuation method for a circuit arrangement having directly controlled control valves of an electrohydraulic or electropneumatic transmission controller of a motor vehicle, **characterized in that** a current monitoring function for limiting a current load in the circuit arrangement is provided, said current monitoring function comprising at least the following steps:
a) ascertaining a total current of the circuit arrangement available at a time,
b) detecting switching requests from switching elements, with a switching request for supplying power to one of the control valves being provided with a priority as a function of its function as a switching element and the type of switching request,
c) comparing the current requirement requested by the switching requests with the available total current,
d) checking the switching requests according to prespecified priorities, and
e) sequentially switching switching elements in accordance with the priority check when the switching requests would lead to the available total current being exceeded, and
f) immediately switching the switching elements when the switching requests would not lead to the available total current being exceeded.

2. Actuation method according to Claim 1, **characterized in that** the available total current is ascertained from an actual total current, prespecified limit currents and predetermined current reserves for switching elements which are still to be switched.

3. Actuation method according to Claim 2, **characterized in that** the actual total current is ascertained from a permanent current load on the circuit arrangement and an actual current requirement of active switching elements.

4. Actuation method according to Claim 2, **characterized in that** a distinction is drawn between continuous current loads and brief current loads in the case of the limit currents.

5. Actuation method according to at least one of Claims 1 to 4, **characterized in that** a maximum permissible continuous current and a briefly available maximum current are determined from the ascertained available total current.

6. Actuation method according to at least one of Claims 1 to 5, **characterized in that** an expected duration of a respective actuation operation is taken into consideration when checking the switching requests.

7. Actuation method according to at least one of Claims 1 to 6, **characterized in that** a switching request for supplying power to a valve is provided with a priority as a function of an active switching phase.

8. Actuation method according to at least one of Claims 1 to 7, **characterized in that** a distinction is drawn at least between the functions switch on, switch over and confirm in respect of the type of switching

9. Actuation method according to at least one of Claims 1 to 8, **characterized in that** characteristic data of the respective electrical fuses is used to ascertain the current requirement of the active switching elements and/or to ascertain the limit currents for continuous and/or brief current loads.

10. Actuation method according to at least one of Claims 1 to 9, **characterized in that** the current requirement of the active switching elements and/or the limit currents for continuous and/or brief current loads are/is ascertained with the aid of a learning algorithm which is derived from previous actuation operations.

## Revendications

1. Procédé de commande d'un arrangement de commutation avec des vannes pilote à commande directe d'une commande de transmission électro-hydraulique ou électropneumatique d'un véhicule automobile, **caractérisé en ce qu'**il est prévu une fonction de surveillance du courant destinée à limiter une charge de courant dans l'arrangement de commutation, lequel comprend au moins les étapes suivantes :
a) détermination d'un courant total disponible dans l'arrangement de commutation à un instant donné,
b) détection de demandes de commutation d'éléments de commutation, une demande de commutation en vue de la mise sous tension de l'une des vannes pilote étant accompagnée d'une priorité qui dépend de sa fonction en tant qu'élément de commutation et de la nature de la demande de commutation,
c) comparaison du besoin en courant résultant des demandes de commutation avec le courant total disponible,
d) contrôle des demandes de commutation d'après des priorités prédéfinies et
e) commutation séquentielle d'éléments de commutation conformément au contrôle des priorités lorsque les demandes de commutation donneraient lieu à un dépassement du courant total disponible et
f) commutation directe des éléments de commutation lorsque les demandes de commutation ne donneraient pas lieu à un dépassement du courant total disponible.

2. Procédé de commande selon la revendication 1, **caractérisé en ce que** le courant total disponible est déterminé à partir d'un courant total actuel, de courants limites prédéfinis et de réservations de courant prédéterminées pour les éléments de commutation qu'il faut encore commuter.

3. Procédé de commande selon la revendication 2, **caractérisé en ce que** le courant total actuel est déterminé à partir d'une charge en courant permanente de l'arrangement de commutation et d'un besoin en courant actuel des éléments de commutation actifs.

4. Procédé de commande selon la revendication 2, **caractérisé en ce que** pour les courants limites, la différence est faite entre les charges en courant permanentes et les charges en courant de courte durée.

5. Procédé de commande selon au moins l'une des revendications 1 à 4, **caractérisé en ce qu'**un courant permanent maximale autorisé et un courant maximum disponible pendant une courte durée sont déterminés à partir du courant total disponible déterminé.

6. Procédé de commande selon au moins l'une des revendications 1 à 5, **caractérisé en ce qu'**une durée attendue d'une commande respective est prise en compte lors du contrôle des demandes de commutation.

7. Procédé de commande selon au moins l'une des revendications 1 à 6, **caractérisé en ce qu'**une demande de commutation en vue de la mise sous tension d'une vanne est accompagnée d'une priorité dépendante d'une phase de commutation active.

8. Procédé de commande selon au moins l'une des revendications 1 à 7, **caractérisé en ce que** concernant la nature de la demande de commutation, la différence est faite au moins entre les fonctions mise sous tension, permutation et confirmation.

9. Procédé de commande selon au moins l'une des revendications 1 à 8, **caractérisé en ce que** des données caractéristiques des fusibles électriques respectifs sont utilisées pour déterminer le besoin en courant des éléments de commutation actifs et/ou pour déterminer les courants limites pour des charges en courant permanentes et/ou de courte durée.

10. Procédé de commande selon au moins l'une des revendications 1 à 9, **caractérisé en ce que** le besoin en courant des éléments de commutation actifs et/ou les courants limites pour des charges en courant permanentes et/ou de courte durée sont déterminés à l'aide d'un algorithme d'apprentissage qui est dérivé des commandes précédentes.
